# EUROPÄISCHE PATENTSCHRIFT

(11) **EP 2 366 290 B1**
(45) Veröffentlichungstag und Bekanntmachung des Hinweises auf die Patenterteilung: **26.03.2014**
(21) Anmeldenummer: 10156921.8
(22) Anmeldetag: 18.03.2010
(51) Int. Cl.: A21C 3/06, A21C 9/08

(54) **Teigwickelvorrichtung, ausgebildet zur maschinellen Herstellung eines gewickelten Teigprodukts aus einem Ausgangsteigstück, sowie zugehöriges Verfahren**
Dough coiling device, designed for mechanical production of a coiled dough product from an initial dough piece and associated method
Dispositif d'enroulement de pâte développé pour la fabrication mécanique d'un produit de boulangerie roulé à partir d'un morceau de pâte de départ et procédé correspondant

(43) Veröffentlichungstag der Anmeldung: 21.09.2011
(73) Patentinhaber: Fritsch GmbH, 97348 Markt Einersheim (DE)
(72) Erfinder: Udo, Bernhardt, D-97346 Iphofen (DE); Josef Hoos, D-97348 Markt Einersheim (DE)
(74) Vertreter: Götz, Georg Alois

(56) Entgegenhaltungen:
- EP-A1- 0 207 903
- EP-A1- 1 321 040
- WO-A1-95/08921
- US-A- 4 809 575

## Beschreibung

Die Erfindung betrifft eine Teigwickelvorrichtung, ausgebildet zur maschinellen Herstellung eines gewickelten Teigprodukts aus einem Ausgangsteigstück, mit einer Förderbandeinrichtung mit einem Auflagebereich, auf den das Ausgangsteigstück zum Wickeln zunächst mit einer Ausgangsauflagefläche auflegbar ist, wobei die Förderbandeinrichtung unterhalb einer Wickeleinrichtung der Teigwickelvorrichtung angeordnet ist, sowie ein Verfahren zur maschinellen Herstellung eines gewickelten Teigprodukts aus einem Ausgangsteigstück mittels einer Teigwickelvorrichtung mit einer Förderbandeinrichtung mit einem Auflagebereich, auf den das Ausgangsteigstück zum Wickeln zunächst mit einer Ausgangsauflagefläche aufgelegt wird, wobei die Förderbandeinrichtung unterhalb einer Wickeleinreichtung der Teigwickelvorrichtung verläuft.

Aus dem Stand der Technik sind verschiedene Teigwickelvorrichtungen bekannt, die beispielsweise dazu dienen, in ihrer Ausgangsform dreieckige Teigstücke zu einem Croissantprodukt aufzuwickeln. Bei solchen maschinellen Teigwickelvorrichtungen befindet sich das zu bearbeitende Teigstück in der Regel auf einer Förderbandeinrichtung, während das Aufwickeln vorgenommen wird. Dabei stellt sich das Problem, wie das Ausgangsteigstück während des Wickelvorgangs in einer definierten Position gehalten werden kann, so dass der Wickelvorgang zu einem Teigprodukt der gewünschten Qualität führt. Beispielsweise müssen ein Verreißen des Teigs, die Bildung von "Falten" und ein "schiefes", ungleichmäßiges Aufwickeln vermieden werden.

Von der Anmelderin selbst wurde in der EP 1 856 979 A2 ein maschinelles Teig-Wickelsystem vorgeschlagen, bei dem Rädchen bzw. Scheiben verwendet werden, um das Teigstück in Kontakt mit einer Förderunterlage zu halten. Dieser Stand der Technik ist Ausgangspunkt der vorliegenden Erfindung. Die Verwendung der Rädchen, die in dieser Druckschrift beschrieben ist, kann allerdings bei der Herstellung von Teigprodukten mit einer Füllung unter Umständen nicht optimal sein. Die Räder könnten verschmutzen, wenn sie die Füllmasse berühren, und der Bereich, in dem die Füllung auf das Ausgangsteigstück aufgetragen werden kann, ist in seiner Breite durch die Räder, die im Normalfall nicht durch die Füllmasse laufen sollten, beschränkt. Zudem stehen die Räder jeweils nur in einem Punkt in Kontakt mit dem Teigstück, so dass das Halten des Teigstücks auf dem Band nur ein punktuelles Halten bzw. ein punktuelle Führung ist. Weiterhin ergibt sich die Notwendigkeit der Einstellung der Geschwindigkeit des Rades relativ zum Band, damit sich das Rad sauber löst, wenn ein bisheriger Haltepunkt bei einem Umlauf des Rades wieder vom Teigstück abgehoben wird. Es dürfen keine Teigreste am Rad kleben bleiben.

Eine weitere Teigwickelvorrichtung ist aus der EP 1 321 040 A1 bekannt, wobei gemäß dieser Druckschrift ein Teigprodukt auf einer perforierten bewegbaren Oberfläche aufliegen kann, unterhalb der sich eine Unterdruckkammer zur Erzeugung eines Sogs befindet. Die Kammer kann mit einer Vakuumquelle verbunden sein. Die Kammer ist auf der Oberseite wenigstens teilweise derart geöffnet, dass die untere Oberfläche eines Förderbands diese Oberseite schließt, während gleichzeitig durch die Perforationen der Bandfläche ein Ansaugen ermöglicht wird. Alternativ kann die Kammer auch durch ein Element geschlossen werden, das Öffnungen aufweist, die ein Ansaugen durch die Perforationen ermöglichen. Der Bereich geringen Drucks erstreckt sich über die Breite der bewegbaren Oberfläche und eine vorbestimmte Länge in der Verarbeitungsrichtung.

Die Anmelderin selbst hat bereits früher einen Seitenkanalverdichter verwendet, der unter einem Förderband angeordnet ist. Dabei wurde bei einer Croissantmaschine ein Schlauch zu einer Kammer in einem Förderbandtisch geführt, die sich nahezu über die gesamte Tischbreite erstreckte. Das Förderband oberhalb der Kammer war gelocht, so dass die aufliegenden Teigstücke auf das Förderband gesaugt wurden. Bei derartigen Anordnungen muss jedoch ein vergleichsweise hoher Unterdruck erzeugt werden. Der "Luftverbrauch" bzw. das zu bewegende Luftvolumen sind beträchtlich.

Daneben ist auf die in der WO 01/41574 A1 beschriebene Vorrichtung zu verweisen, gemäß der eine angetriebene Trommel verwendet wird, die ein zylindrisches Gehäuse aufweist, in das ein Lochmuster bzw. Schlitzmuster eingebracht ist. An diese Trommel wird zur Erzeugung eines Sogs durch die Löcher bzw. Schlitze eine Vakuumquelle angeschlossen. Auch bei der Verwendung einer solchen gelochten Walze muss ein beträchtlicher Unterdruck erzeugt werden. Es ist ein erhebliches Luftvolumen zu bewegen. Des Weiteren kann mit einer solchen Walze bzw. Trommel das Teigstück nicht über seine komplette Länge in der Förderrichtung angesaugt werden, sondern immer nur partiell. Zudem dürfte die Reinigung einer solchen Trommel aufwändig sein, da ja Teigreste bzw. Mehl in das Innere gesaugt werden können und von dort wieder entfernt werden müssen, wozu die Anlage stillstehen und teilweise demontiert werden muss. Die Lochrandbereiche sind ebenfalls zu reinigen. Insgesamt besteht bei Systemen mit einem hohen Luftverbrauch bzw. Luftverlust das Problem der dadurch entstehenden beträchtlichen Luftgeräusche.

Der Erfindung liegt somit die Aufgabe zugrunde, eine gegenüber dem bekannten Stand der Technik (EP 1 321 070 A1) verbesserte Teigwickelvorrichtung anzugeben.

Zur Lösung dieser Aufgabe ist die im Anspruch 1 angegebene Teigwickelvorrichtung vorgesehen.

Die erfindungsgemäße Teigwickelvorrichtung weist somit zum Halten des Ausgangsteigstücks (das zweckmäßigerweise bereits fertig ausgewalzt ist) bzw. selbstverständlich auch zum Halten des Teigstücks während des Wickelvorgangs selbst unterhalb des Förderbands, genauer gesagt des für das Teigstück vorgesehenen Auflagebereichs des Förderbands, eine Unterdrucksaugvorrichtung auf, die oberseitig von einer Platte begrenzt bzw. abgedeckt wird. Diese Saugvorrichtung besitzt die Besonderheit, dass Ansaugkanäle, die auf der oberen Platte der Unterdrucksaugvorrichtung in Richtung des Förderbandauflagebereichs vorgesehen sind, zum Auflagebereich der Förderbandeinrichtung (also nach oben) hin so geöffnet sind, dass sie durch ihre Anordnung die ursprüngliche Auflagefläche des Teigstücks, also die Form bzw. Größe des Ausgangsteigstücks vor dem Aufwickeln oder Aufrollen, nachbilden. Die Platte mit den Ansaugöffnungen befindet sich unterhalb des Förderbandauflagebereichs und grenzt somit direkt bzw. mit einem gewissen (geringen) Abstand an die Unterseite des Auflagebereichs, während auf der Oberseite des Auflagebereichs das Teigstück aufliegt bzw. transportiert wird. Dabei können die Kanäle selbstverständlich Öffnungen unterschiedlicher Formen und Arten, insbesondere runde und/oder ovale Öffnungen, nach oben zum Förderband hin, auf dem das Teigstück aufliegt, aufweisen. Die Anzahl der Öffnungen kann unterschiedlich sein. Entscheidend für die Erfindung ist, dass die Öffnungen der Ansaugkanäle nach oben insgesamt so angeordnet sind bzw. sich über einen solchen Bereich der Plattenoberfläche erstrecken, dass ihr Gesamterscheinungsbild auf die Form und Größe des Ausgangsteigstücks hin angepasst ist bzw. dieses beschreibt. Die Platte selbst ist erfindungsgemäß ein separates Bauteil.

Das flächenmäßige Halten des Teigstücks durch die Unterdrucksaugvorrichtung verhindert ein Verreißen beim Anrollen. Die formen-und/oder größenmäßige Anpassung der Anordnung und die geeignete Wahl der Anzahl der Ansaugkanäle sorgt dafür, dass insgesamt, im Vergleich zu Unterdruckeinrichtungen mit Ansaugflächen, die sich über die gesamte Förderbandbreite und eine beträchtliche Länge des Förderbands erstrecken, ein geringerer Unterdruck erzeugt werden muss. Das Luftvolumen, das im Betrieb der Unterdruckeinrichtung in Bewegung versetzt werden muss, ist kleiner, wobei außerdem die Geräuschentwicklung verringert werden kann.

Die Verwendung der Unterdruckvorrichtung mit dem formmäßig und größenmäßig angepassten oberen Luftansaugbereich ermöglicht es, die gesamte Fläche des Ausgangsteigstücks zu halten, während beispielsweise beim Einsatz von Rädchen zum Halten nur jeweils ein Punkt der Oberfläche des Teiglings festgehalten werden kann. Dadurch kann es beim Anrollen während des Wickelvorgangs unter Umständen zu einem Verreißen kommen. Die Rädchen, die direkt mit dem Teig in Berührung kommen, können verschmutzen und ihre Geschwindigkeit relativ zum Förderband muss passend eingestellt werden, so dass es nicht zu einem unerwünschten Hochziehen des Teigs kommt. Die Unterdruckeinrichtung ermöglicht demgegenüber ein gleichmäßiges Halten des Teigstücks über die Fläche und somit eine sehr schonende Behandlung des Teigstücks.

Der Auflagebereich der Förderbandeinrichtung kann luftdurchlässig und/oder mit Öffnungen und/oder Löchern ausgebildet sein, insbesondere als Lochband und/oder mit einer Banddicke im Bereich eines Millimeters.

Vorzugsweise wird ein Lochband verwendet, das eine vergleichsweise geringe Banddicke von bzw. im Bereich eines Millimeters oder sogar darunter aufweist. Dies bietet gegenüber stärkeren Lochbändern mit mehreren Millimetern Dicke den Vorteil, dass Teigreste nicht wie bei diesen tief in die einzelnen Löcher hineingedrückt werden können. Der Reinigungsaufwand ist somit bei dünneren Bändern geringer. Im Rahmen der vorliegenden Erfindung ist es zu bevorzugen, wenn das Auswalzen des Teiglings in die Ausgangsform, ausgehend von der er aufgewickelt werden soll, bereits vorab erfolgt. Dann ist in dem Bereich bzw. Verarbeitungsstadium, in dem die Unterdrucksaugvorrichtung eingesetzt wird, nur noch ein Halten des Teiglings für den Aufwickelvorgang zu leisten. Andere Bearbeitungstätigkeiten am Teigstück sind an dieser Stelle des Verarbeitungsprozesses nicht mehr erforderlich. Dies hat gegenüber Anordnungen, bei denen beispielsweise ein Auswalzen durch eine darüber angeordnete Walze erfolgt, während der Teigling parallel bzw. gleichzeitig durch eine Unterdrucksaugvorrichtung in Position gehalten wird, den Vorteil, dass das Hineindrücken von Teig in die Lochbänder und gegebenenfalls sogar die Ansaugöffnungen einer darunter liegenden Platte mit Saugkanälen weitgehend vermieden werden kann.

Die Platte definiert durch die Anordnung der Ansaugöffnungen auf der dem Auflagebereich der Förderbandeinrichtung zugewandten Oberfläche eine Schablone des Ausgangsteigstücks, insbesondere eine Schablone eines Ausgangsteigstücks in einer Dreiecksform.

Ausgangsteigstücke weisen oft eine, zumindest im Wesentlichen, dreieckige Grundform auf, wobei selbstverständlich einzelne oder alle Ecken der Grundform abgerundet oder abgeschnitten sein können. Solche dreieckigen Grundformen kommen beispielsweise bei der Croissantherstellung vor. Die Platte der Unterdrucksaugvorrichtung, die dem Förderband zugewandt ist, stellt in dem Bereich, in dem die Ansaugöffnungen bzw. Austrittsöffnungen der Ansaugkanäle zu finden sind, eine Schablone für dieses Ausgangsteigstück dar.

Die Platte und/oder ein dem Auflagebereich der Förderbandeinrichtung zugewandter oberer Bereich der Platte, der eine Schablone des Ausgangsteigstücks definiert, sind gemäß Erfindung auswechselbar. Somit ist es denkbar, dass für die Unterdrucksaugvorrichtung der Teigwickelvorrichtung unterschiedliche Oberflächen bzw. Platten existieren, die jeweils Ansaugkanalöffnungen aufweisen, die unterschiedliche Formen von Ausgangsteigstücken bzw. unterschiedliche Größen von Ausgangsteigstücken nachbilden bzw. an diese angepasst sind. Soll nun die Produktion umgestellt werden, um beispielsweise größere oder kleinere Croissants zu wickeln oder andere Teigstücke, beispielsweise mit einer quadratischen Ausgangsform, zu verarbeiten, so kann relativ einfach die bisherige Platte durch eine für die neuen Ausgangsteigstücke passende Platte ausgetauscht werden, so dass auch bei einer anderen Grundform und Größe des Ausgangsteigstücks weiterhin eine Optimierung des Luftverbrauchs und des Energieverbrauchs der Unterdrucksaugvorrichtung gegeben ist. Selbstverständlich ist es möglich, dass nicht der gesamte obere Bereich beispielsweise einer Unterdruckkammer, sondern nur ein kleinerer Bereich, in dem sich die Schablone befindet, ausgetauscht wird. Ebenso ist es möglich, dass eine Grundplatte mit einer Vielzahl von Ansaugkanälen über die gesamte Breite und Länge unterhalb einer oberen Platte, auf der dann die Form des jeweiligen Teigstücks nachgebildet und die austauschbar ist, angeordnet ist, wobei allerdings in diesem Fall ein seitlicher Lufteintritt durch einen Zwischenrum zwischen den Platten verhindert werden müsste, um die Vorteile der Erfindung wie den niedrigen Luftverbrauch weiterhin sicherzustellen. Die Grundplatte kann zu einer bereits existierenden Unterdrucksaugvorrichtung gehören, die mit einer Schablone nachgerüstet wird. Die Schablone kann je nach Produktgröße und Form austauschbar sein, um jeweils ein optimales Halten bei geringen Energieverbrauchswerten sicherzustellen.

Die Unterdrucksaugvorrichtung kann wenigstens ein mit wenigstens einer nicht dem Auflagebereich der Förderbandeinrichtung zugewandten Öffnung eines durch die Platte verlaufenden Ansaugkanals verbundenes oder verbindbares Ansaugelement aufweisen. Das Ansaugelement ist dann mit derjenigen Öffnung des jeweiligen Ansaugkanals oder auch mehrerer Ansaugkanäle verbunden, die nicht zum Förderband weist bzw. weisen, also in der Regel mit den auf der entgegengesetzten Plattenseite (nach unten hin) vorgesehenen Kanalöffnungen. Selbstverständlich müssen die zweiten Öffnungen der Ansaugkanäle nicht zwangsläufig auf der dem Förderband abgewandten unteren Fläche der Platte liegen, sondern sie können je nach konkreter Ausbildung der Unterdruckvorrichtung auch seitlich angeordnet sein.

Ansaugelemente können beispielsweise Sauger sein, die z. B. über Schläuche mit den unteren Öffnungen der Saugkanäle verbunden sind, so dass durch die Saugkanäle Luft von oben angesaugt wird, die den Teigling auf dem Förderband, insbesondere auf einem Lochband, in Position hält. Es ist möglich, ein einziges Gebläse zu verwenden, um die Luft durch alle Kanäle anzusaugen. Prinzipiell besteht aber auch die Möglichkeit, dass mehrere Saugelemente verwendet werden, die jeweils für das Ansaugen der Luft durch einen Teil der Ansaugkanäle sorgen.

Die Wickeleinrichtung der Teigwickelvorrichtung kann wenigstens zwei sich in der Förderrichtung der Förderbandeinrichtung erstreckende Wickelkomponenten, insbesondere jeweils mit einem Schwenkarm, aufweisen, die in einer Ebene parallel (gegebenenfalls nahezu identisch) zur Förderebene senkrecht oder quer zur Förderrichtung voneinander beabstandet sind, insbesondere einstellbar beabstandet.

Das Wickeln erfolgt somit beispielsweise unter Zuhilfenahme zweier voneinander räumlich getrennter Komponenten, die beispielsweise Schwenkarme mit weiteren für die Durchführung der Wicklung daran montierten Bauteilen sein können. Diese in der Regel zwei Wickelkomponenten können sich vorzugsweise längs in Förderrichtung erstrecken und in einer hierzu senkrechten Richtung in einer parallelen Ebene zur Förderebene voneinander beabstandet sind. Die Längsrichtung der Schwenkarme entspricht somit der Richtung, in die das Teigstück gefördert wird. Zwischen den beiden Längsachsen der Schwenkarme besteht gleichzeitig ein Abstand. Diese Beabstandung senkrecht bzw. quer zur Förderrichtung hat den Zweck, dass die Wickelkomponenten, die zwangsläufig, damit sie ihre Wickelfunktionen erfüllen können, sehr nahe an der Auflagefläche des Förderbands bzw. auf dieser aufliegend ausgebildet sind, quer zur Förderrichtung zwischen sich einen freien Raum aufweisen, so dass eine eventuell vorhandene Füllung des Teiglings beim Anwickeln nicht durch die in die Füllung hineinreichenden Schwenkarme oder andere Wickelkomponenten verschmiert wird. Dementsprechend ist es von Vorteil, wenn der Abstand der Wickelkomponenten in dieser senkrechten oder queren Richtung veränderbar ist und somit an unterschiedliche Füllung angepasst werden kann. So können unterschiedliche Teigstücke unterschiedlicher Größe und mit verschiedenen Füllungen mittels der erfindungsgemäßen Teigwickelvorrichtung verarbeitet werden.

Die Wickeleinrichtung, insbesondere eine Wickelkomponente der Wickeleinrichtung, kann wenigstens eine Vormatte zum Anheben einer in der Förderrichtung der Förderbandeinrichtung vorderen Kante (beispielsweise der Basis eines Dreiecks) des Ausgangsteigstücks und/oder zum Anrollen des Ausgangsteigstücks und/oder eine Wickelmatte zum Wickeln oder Fertigwickeln des Ausgangsteigstücks oder eines bereits teilweise gewickelten Teigstücks aufweisen.

Die Matten sind oberhalb des Auflagebereichs der Förderbandeinrichtung bzw., zumindest teilweise, auf diesem aufliegend bzw. in Kontakt mit diesem vorgesehen, so dass sie an dem zu wickelnden Teigstück angreifen und den Wicklungsvorgang initiieren, durchführen bzw. fertigstellen können. Dabei bietet sich eine Anordnung an, bei der zwei Wickelkomponenten vorgesehen sind, die jeweils über eine erste Vormatte und eine zweite Wickelmatte, die sich in Förderrichtung beträchtlich über die Vormatte hinaus erstreckt, verfügen.

Wenigstens eine Vormatte kann eine Drahtmatte sein und/oder wenigstens eine Wickelmatte kann eine Kunststoffmatte und/oder Gummimatte und/oder elastische und/oder sich bei Kontakt flexibel an das Teigstück anpassende Matte sein. Die in Förderrichtung vergleichsweise kurz ausgebildete Vormatte ist somit vorzugsweise eine Drahtstruktur, die unterhalb der eigentlichen Wickelmatte, die sich in Förderrichtung über die Drahtmatte hinaus erstreckt, angeordnet ist. Eine oder die Wickelmatte kann eine Kunststoffmatte, Gummimatte bzw. eine aus einem anderen Material bzw. unterschiedlichen Materialien bestehende elastische Matte sein, die sich bei Kontakt mit dem noch nicht oder bereits teilweise gewickelten Teigstück an dessen Form anpasst. Durch die Elastizität bzw. Flexibilität der eigentlichen Wickelmatte ist eine optimale Durchführung des Wickelprozesses ohne schädigende oder unerwünschte Einwirkungen auf das Teigstück möglich. Grundsätzlich sind auch Anordnungen denkbar, bei denen mehrere Wickelmatten zum Einsatz kommen bzw. bei denen anstelle der Vormatte andere Mittel zum Anheben der vorderen Kante des ankommenden Teigstücks, beispielsweise der Basis bei einem dreieckigen Croissantteigstück, vorgesehen sind.

Die Wickeleinrichtung, insbesondere eine Wickelkomponente der Wickeleinrichtung der Teigwickelvorrichtung, kann wenigstens ein Gewichtsteil aufweisen, insbesondere wenigstens eine Gewichtskette und/oder wenigstens ein Gewichtsstück und/oder wenigstens ein bezüglich wenigstens einer Achse, die insbesondere in einer zur Förderebene parallelen Ebene senkrecht oder quer zur Förderrichtung der Förderbandeinrichtung verläuft, bewegbar angeordnetes Gewichtsteil und/oder ein hinsichtlich seiner Gewichtskraft variables Gewichtsteil und/oder austauschbares Gewichtsteil.

Das oder die Gewichte können gelenkig angebracht sein. Beispielsweise können Gewichtsketten aus einzelnen Kettengliedern vorgesehen sein, deren Gelenke bzw. Gelenkachsen in einer Ebene oberhalb der Förderebene senkrecht bzw. quer zur Förderrichtung verlaufen, so dass die Gewichtskette insgesamt ebenfalls, vergleichbar der Wickelmatte, eine flexible Struktur aufweist und sich so an das aufzuwickelnde Teigstück anpasst. Neben gelenkig angebrachten Gewichtsketten bzw. Bändern mit Einzelgewichten oder auch massiven Gewichtsbändern können zusätzlich ergänzende Gewichte, beispielsweise für das Anheben der vorderen Kante des ankommenden Teiglings, vorgesehen sein. Bei diesen Gewichten kann es sich u.a. um austauschbare zylindrische Gewichte handeln. Die Gewichte können je nach Teigfestigkeit oder auch nach Größe des aufzuwickelnden Teigstücks ausgetauscht und variiert werden, beispielsweise, indem Kettenglieder ergänzt oder zusätzliche Gewichtsstücke auf eine Achse aufgeschoben werden.

Die Teigwickelvorrichtung kann zur Reinigung der Förderbandeinrichtung, insbesondere des Auflagebereichs der Förderbandeinrichtung, wenigstens eine Abstreifer- und/oder Bürstenanordung aufweisen. Die Abstreifer bzw. Bürsten sind vorzugsweise auf der Unterseite der Förderbandeinrichtung, also dort, wo kein direkter Kontakt mit dem aufzuwickelnden Teigling zustande kommt bzw. das Band nach einer Umlenkrolle unterhalb der Unterdruckkammer oder anderen Teilen der Unterdrucksaugvorrichtung verläuft, angeordnet. Das Anbringen der Bürsteneinrichtungen oder Abstreifer kann in diesem unteren Bereich an der Innen- und/oder Außenseite des Bandes erfolgen, vorzugsweise an beiden Bandseiten, um eine optimale Reinigung des Auflagebereichs des Bandes zu erreichen. Die Abstreifer und Bürsten befinden sich vorzugsweise nicht in dem oberen Bereich der Förderbandeinrichtung, der direkt dem Transport des Teiglings dient. So wird der Vorteil erreicht, dass die Reinigung während des Betriebs der Teigwickelvorrichtung erfolgen kann. Bei einer Vorrichtung gemäß dem Stand der Technik, bei der beispielsweise wie beschrieben Rädchen, die durch die Teigmasse laufen, oder eine Saugwalze mit Ansaugöffnungen verwendet werden, ist hingegen eine Reinigung in aller Regel nur außerhalb der Betriebszeiten möglich.

In der Förderrichtung der Förderbandeinrichtung kann im Anschluss an diese erste Förderbandeinrichtung eine zweite Förderbandeinrichtung vorgesehen sein, insbesondere derart, dass diese zweite Förderbandeinrichtung mit einer bezüglich der ersten Förderbandeinrichtung geringeren Geschwindigkeit betreibbar ist und/oder sich eine Wickelmatte der Wickeleinrichtung bis in den Bereich der zweiten Förderbandeinrichtung erstreckt.

So kann eine Übergabe des Teiglings von einem ersten Fördertisch zu einem zweiten Fördertisch stattfinden, wobei der erste Fördertisch bzw. die erste Förderbandeinrichtung mit einer Geschwindigkeit von beispielsweise 30-40 Metern pro Minute betrieben werden können, während die zweite Förderbandeinrichtung mit einer geringeren Geschwindigkeit, beispielsweise mit einer Geschwindigkeit von oder im Bereich von 10 Metern pro Minute, läuft. Mit diesem Unterschied der Fördergeschwindigkeiten wird dem Wicklungsprozess insoweit Rechnung getragen, als dass die aufgewickelten Teigstücke in der Längsrichtung bzw. Förderrichtung wesentlich geringere Maße aufweisen. Die geringe Fördergeschwindigkeit des zweiten Bandes, das sich an das erste anschließt, sorgt insbesondere in Kombination mit einer sich auch über einen Teil des zweiten Bandes erstreckenden Wickelmatte dafür, dass die Teigstücke, wenn sie den Wickelbereich verlassen, optimal beruhigt und ruhig gelagert sowie gleichmäßig angeordnet sind. Ein Verreißen der Teigstücke kann verhindert werden. Damit die Teigstücke ihre Zielgeschwindigkeit, zumindest näherungsweise, bereits während des Wickelvorgangs erhalten, wird die Wickelmatte auf den zweiten Tisch durchgeführt. Das Teigstück verlässt die Wickelmatte so langsamer und wird bei der Übergabe nicht verrissen. Das Teigstück kann kontrolliert mit einem gewünschten Abstand zu den anderen Teigstücken aus dem Wickelbereich entlassen werden.

Oberhalb wenigstens einer oder der Förderbandeinrichtung können in einer geeigneten und/oder veränderbaren Höhe wenigstens zwei, in einer Ebene parallel zur Förderebene senkrecht oder quer zur Förderrichtung der Förderbandeinrichtung beabstandete und in Förderrichtung oder wenigstens einer Richtung verschiebbare und/oder austauschbare Lagebeeinflussungsmittel, insbesondere in Bügelform, angeordnet sein, mittels derer die Lage des Teigstücks beeinflussbar ist.

Vorzugsweise sind zur Lagebeeinflussung zwei Bügel vorgesehen, die bezüglich ihrer Lage in Längsrichtung der Förderbandeinrichtung(en) veränderbar bzw. verschiebbar sind oder die durch längere oder kürzere Bügel ausgetauscht werden können. Diese Bügel am Ende der Wickelstrecke dienen zur Verbesserung der Ausrichtung des gewickelten Teiglings bzw. als Lagekontrollmittel. Durch Verstellen der beispielsweise L-förmigen Bügel kann die Lage der Teigstücke bzw. die Lage des Ende eines Teigstücks verändert werden. Beispielsweise kann so erreicht werden, dass beim Aufwickeln eines dreieckigen Teigstücks, das mit der Basis voran in die Wickelvorrichtung einläuft, die hintere Spitze nach dem Aufwickeln auf dem Förderband aufliegt.

Des weiteren wird zur Lösung der oben genannten Erfindungsaufgabe das im Anspruch 12 angegebene Teigprodukt-Herstellungsverfahren vorgeschlagen.

Hat beim erfindungsgemäßen Verfahren der Wickelvorgang (beispielsweise durch anheben der vorderen Kante des Teigstücks) bereits begonnen, so kann das Teigstück selbstverständlich nicht mehr über seine gesamte Fläche, sondern nur noch über seinen im Vergleich zur Ausgangsauflagefläche verkleinerten Auflagebereich angesaugt werden. Beim erfindungsgemäßen Verfahren erfolgt das Ansaugen mittels der Unterdruckvorrichtung aber zunächst derart, dass quasi die gesamte Ausgangsfläche des Teiglings angesaugt wird. Die Luft wird durch die beispielsweise runden, ovalen oder schlitzförmigen oberen Öffnungen der Ansaugkanäle angesaugt. Während das Teigstück auf diese Art und Weise gehalten wird, beginnt das Aufwickeln oder Aufrollen beispielsweise durch Hochstellen der vorderen Kante des Teigstücks.

Beim erfindungsgemäßen Wickelverfahren bzw. Halteverfahren für ein Teigstück, das in einer Teigwickelvorrichtung verarbeitet wird, wird durch die Erzeugung eines Unterdrucks einerseits das Teigstück flächig gehalten, während andererseits durch die Anpassung der Öffnungen der Ansaugkanäle an die Teigfläche die Luftmassen, die bewegt werden müssen, optimal gering gehalten werden. Es muss nur ein vergleichsweise niedriger Unterdruck erzeugt werden, um ein sicheres Halten und Positionieren des Teigstücks zu gewährleisten.

Die Unterdrucksaugvorrichtung kann das Ausgangsteigstück durch einen luftdurchlässigen und/oder mit Öffnungen und/oder Löchern versehenen Auflagebereich der Förderbandeinrichtung, insbesondere durch ein Lochband und/oder durch ein Band mit einer Banddicke von bzw. im Bereich eines Millimeters, ansaugen und/oder die Unterdrucksaugvorrichtung kann das Ausgangsteigstück mittels wenigstens eines mit wenigstens einer nicht dem Auflagebereich der Förderbandeinrichtung zugewandten Öffnung eines durch die Platte verlaufenden Ansaugkanals verbundenen oder verbindbaren Ansaugelements ansaugen.

Beim erfindungsgemäßen Wickelverfahren erfolgt das Auswalzen der Teiglinge zu den aufzuwickelnden bzw. aufzurollenden Ausgangsteigstücken vorab, also in einem Bereich, der dem Unterdruckbereich mit der Schablone in Ausgangsteiglingsform vorgelagert ist. Im Bereich des Unterdrucks erfolgt nur ein Halten des Teiglings, so dass der Wickelvorgang erleichtert wird. Andere Tätigkeiten und Funktionen werden an dieser Stelle nicht ausgeführt, um so ein Beschädigen des Teiglings oder Fehler beim Aufwickeln wie eine Wellenentstehung oder unerwünschte Dehnungen der Teigmasse zu vermeiden.

Durch die Anordnung der Ansaugöffnungen auf der dem Auflagebereich der Förderbandeinrichtung zugewandten Oberfläche der Platte wird gemäß Erfindung eine Schablone des Ausgangsteigstücks, insbesondere Ausgangsteigstücks in einer Dreiecksform, definiert und/oder die Platte und/oder ein dem Auflagebereich der Förderbandeinrichtung zugewandter oberer Bereich, der eine Schablone des Ausgangsteigstücks definiert, wird zur Anpassung an Ausgangsteigstücke unterschiedlicher Formen und/oder Größen ausgewechselt . Die Schablone wird beim erfindungsgemäßen Wickelverfahren somit je nach Produktgröße bzw. Produktform ausgetauscht, um so den Energieverbrauch und auch die Geräuschentwicklung bei der Unterdruckerzeugung durch das Gebläse gering zu halten.

Weitere Vorteile, Merkmale und Einzelheiten der Erfindung ergeben sich anhand der folgenden Ausführungsbeispiele sowie aus den Zeichnungen. Dabei zeigen:
- Figur 1: eine seitliche Ansicht (aus einer Richtung senkrecht zur Förderrichtung) einer erfindungsgemäßen Teigwickelvorrichtung zur Durchführung eines erfindungsgemäßen Verfahrens,
- Figur 2: eine Ansicht eines Teils der auswechselbaren Platte der Teigwickelvorrichtung der Figur 1,
- Figur 3: eine perspektivische Längsschnittdarstellung der Teigwickelvorrichtung der Figur 1,
- Figur 4: eine weitere perspektivische Ansicht der Teigwickelvorrichtung der Figur 1 und
- Figur 5: eine perspektivische Ansicht einer weiteren Teigwickelvorrichtung.

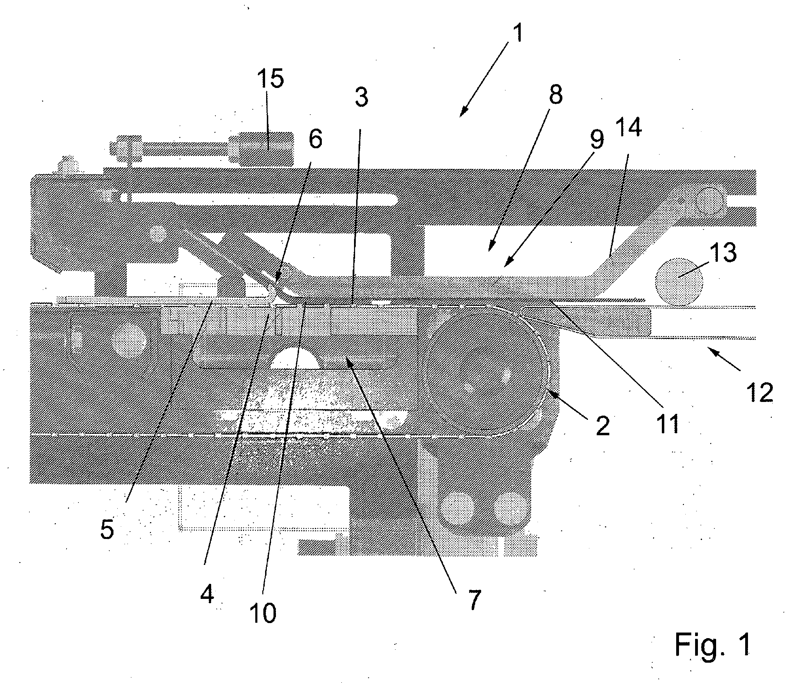

In der Figur 1 ist eine seitliche Ansicht einer erfindungsgemäßen Teigwickelvorrichtung 1 zur Durchführung eines erfindungsgemäßen Verfahrens gezeigt. Die Teigwickelvorrichtung 1 weist eine erste Förderbandeinrichtung 2 auf, deren Auflagebereich von einem Lochband 3 gebildet wird. Unterhalb des oberen Teils des Lochbands 3 (also unterhalb des Abschnittes des Bandes vor der Umlenkrolle) befindet sich eine Platte 4 mit von oben nach unten verlaufenden Ansaugkanälen, die oben zum Lochband 3 hin geöffnet sind. So wird Luft von oben beispielsweise mittels eines hier nicht gezeigten Gebläses durch die nach unten hin ebenfalls offenen Ansaugkanäle angesaugt. Dadurch wird ein Ausgangsteigstück 5 zum Wickeln in seiner Lage gehalten, so dass ein unerwünschtes Verrutschen oder eine unerwünschte Veränderung der Position während des Wickelvorgangs verhindert werden. Der Wickelvorgang beginnt damit, dass, wie gezeigt, die vordere Kante 6 des Ausgangsteigstücks 5, bei einem zu wickelnden Croissant beispielsweise die vorauseilende Basis, angehoben wird. Um den Ansaugvorgang zu optimieren, weist die Unterdrucksaugvorrichtung 7 mit der Platte 4 auf der Oberseite der Platte 4 Ansaugkanalöffnungen auf, die die Ausgangsform des Ausgangsteigstücks 5 nachbilden, also im Fall eines im Wesentlichen dreieckigen Croissants vergleichbar einer Schablone diese dreieckige Croissantform nachbilden. Dabei weist die Platte 4 als Ansaugöffnungen runde Öffnungen, ovale Öffnungen, Schlitze und/oder dergleichen auf, die in ihrer Anzahl, Größe bzw. Form so gewählt sind, dass sie an das jeweils zu verarbeitende Teigstück 5 angepasst sind. Durch die Verwendung einer solchen Schablone als bzw. für die Platte 4 kann der Energieverbrauch beim Ansaugen minimiert werden. Dadurch, dass nur eine geringe Luftmenge bewegt werden muss, kann die Geräuschentwicklung in einem verträglichen Bereich gehalten.

Von der Wickeleinrichtung 8 oberhalb der ersten Förderbandeinrichtung 2 ist in der Darstellung der Figur 1 eine schwenkarmartige Wickelkomponente 9 zu sehen, die außerdem über eine Vormatte 10 aus Draht verfügt, die sich in der Förderrichtung der ersten Förderbandeinrichtung 2 nur über einen ersten vorderen Teil erstreckt. Des weiteren verfügt die Wickelkomponente 9 über eine Wickelmatte 11, die sich nicht nur über den in Förderrichtung ersten vorderen Bereich des ersten Förderbands 2 erstreckt, sondern auch über den in Förderrichtung nachfolgenden oberen Bereich der ersten Förderbandeinrichtung 2 sowie den Anfangsbereich einen weiteren Förderbandeinrichtung, der zweiten Förderbandeinrichtung 12. Während die erste Förderbandeinrichtung 2 mit einer vergleichsweise hohen Geschwindigkeit betrieben wird, beim hier gezeigten Ausführungsbeispiel mit 30-40 Metern pro Minute, wird die zweite Förderbandeinrichtung mit einer verringerten Geschwindigkeit von etwa 10 Metern pro Minute betrieben. Durch das Übergreifen der Wickelmatte 11 von der ersten Förderbandeinrichtung 2 auf die zweite Förderbandeinrichtung 12 werden die dann bereits (weitgehend oder vollständig) aufgewickelten Teigstücke 5 schon vor dem Erreichen der zweiten Förderbandeinrichtung 12 ein wenig beruhigt. Durch die verringerte Geschwindigkeit wird zudem erreicht, dass die nun gewickelten Teigstücke 5 gleichmäßig angeordnet sind und zudem mit einem an ihre im gewickelten Zustand verringerte Ausdehnung in der Förderrichtung angepassten Abstand gelagert werden. Ein fertiges Wickelprodukt ist schematisch als Wickelprodukt 13 in der Figur 1 angedeutet.

Während durch die Drahtmatte bzw. im Bereich der Drahtmatte (Vormatte 10) im Wesentlichen das Anheben bzw. Anrollen des Ausgangsteigstücks 5 erreicht wird, wird das Teigstück 5 durch die Wickelmatte 11 weiter aufgewickelt, bis schließlich der gewünschte fertige Aufwickelzustand, hier eine Croissantform, erreicht ist.

Oberhalb der Wickelmatte 11 befindet sich eine Gewichtskette 14 zur Gewichtaufbringung auf die Wickelmatte 11. Zudem ist ein zylindrisches Schwenkgewicht 15 vorgesehen. Die Gewichtskette 14 weist einzelne, in der Darstellung der Figur 1 nicht zu erkennbare Glieder auf, die gegeneinander in Achsen senkrecht zur Förderrichtung bzw. Längsachse der ersten Förderbandeinrichtung 2 bewegbar sind, um so Flexibilität herzustellen. Die Wickelmatte 11 unterhalb der Gewichtskette 14 ist im hier gezeigten Ausführungsbeispiel aus Kunststoff ausgebildet, so dass sie sich elastisch und flexibel an das Ausgangsteigstück 5 bzw. ein bereits teilweise oder ganz aufgewickeltes Teigstück 5 anpasst. Die Gewichtskette 14 kann gegebenenfalls um ein oder mehrere Glieder verkürzt oder verlängert werden, um unterschiedlichen Teigprodukten unterschiedlicher Formen und Größen Rechnung zu tragen. Weiterhin kann das Schwenkgewicht 15 ausgetauscht oder erweitert werden, beispielsweise zur Anpassung an unterschiedliche Teigfestigkeiten.

Soll nun die Produktion beispielsweise auf kleinere Croissants umgestellt werden, so kann neben Veränderungen bei den Gewichten im Sinne der Erfindung ein Austausch der Platte 4 vorgenommen werden, wobei diese durch eine Platte mit oberen Ansaugöffnungen ersetzt wird, deren Lage, Anzahl, Form usw. an die Form und Größe des neuen Ausgangsteigstücks angepasst ist.

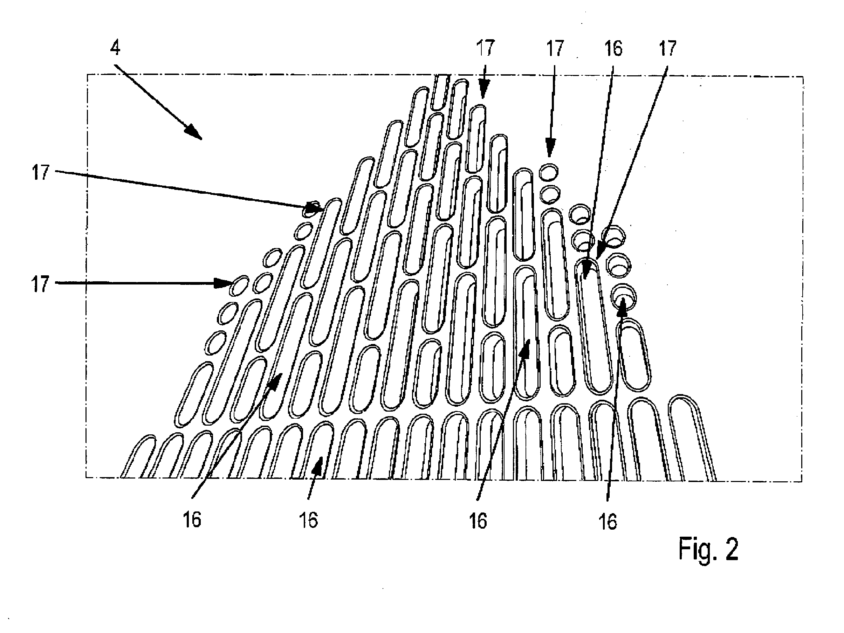

Die Figur 2 zeigt eine Ansicht der auswechselbaren Platte 4 der Teigwickelvorrichtung 1 der Figur 1. Die auswechselbare Platte 4 weist eine Vielzahl von durch ihre Fläche von oben nach unten hindurch verlaufenden Ansaugkanälen 16 auf, die oberseitig Ansaugöffnungen 17 haben. Im vorliegenden Fall verlaufen die Kanäle 16 senkrecht zur oberen Oberfläche der Platte 4. Ein solcher Verlauf ist zwar zweckmäßig, muss jedoch nicht zwangsläufig gegeben sein. In der Darstellung ist zu erkennen, dass die Ansaugöffnungen 17 auf der Oberseite, die sich nach der Montage der Platte 4 in der erfindungsgemäßen Wickelvorrichtung 1 an das darüber liegende Lochband 3 anschließen, die Form des hier nicht gezeigten Ausgangsteigstücks 5 nachbilden, bei dem es sich vorliegend um ein Croissantteigstück mit einer dreieckigen Grundform handelt. Die Ansaugöffnungen 17 bzw. die Ansaugkanäle 16 sind also von ihrer Zahl, Anordnung und Größe her so gewählt, dass dadurch ein flächiges Ansaugen des Ausgangsteigstücks 5 ermöglicht wird. Das Ausgangsteigstück 5 wird somit über seine gesamte auf dem Förderband aufliegende Fläche gehalten, wobei die Geräuschentwicklung und der Energieverbrauch niedrig gehalten werden können, da die Platte 4 mit den Ansaugöffnungen 17 auf der Oberseite quasi eine Schablone für das Ausgangsteigstück 5 darstellt. Ein Ansaugen an Stellen, die überhaupt nicht in Kontakt mit dem Ausgangsteigstück 5 kommen könnten bzw. über die gesamte Breite einer ersten Förderbandeinrichtung wird zweckmäßigerweise vermieden.

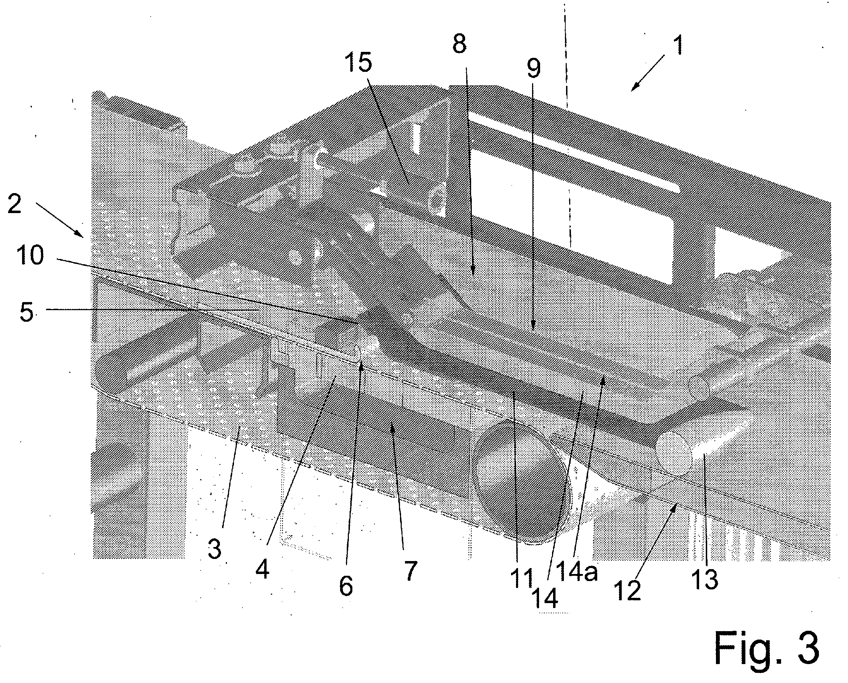

Die Figur 3 zeigt eine perspektivische Längsschnittdarstellung der Teigwickelvorrichtung 1 der Figur 1. Es werden, wie auch in den folgenden Figuren, zur Bezeichnung gleicher oder sich zumindest im Wesentlichen entsprechender Teile gleiche Bezugszeichen wie in der Figur 1 verwendet.

In der Darstellung der Figur 3 ist im Vergleich zur Figur 1 besser zu erkennen, dass die erste Förderbandeinrichtung 2 einen Auflagebereich in Form eines Lochbands 3 aufweist. Des Weiteren ist im hier gezeigten Schnitt die Dreiecksform des Ausgangsteigstücks 5, das hier entlang einer Spiegelachse in der Förderrichtung der ersten Förderbandeinrichtung 2 geschnitten ist, zu erkennen. Die Gewichtskette 14 besteht im hier gezeigten Fall aus Segmenten, die links und rechts einer Mittelebene 14a der Gewichtskette 14 angeordnet sind.

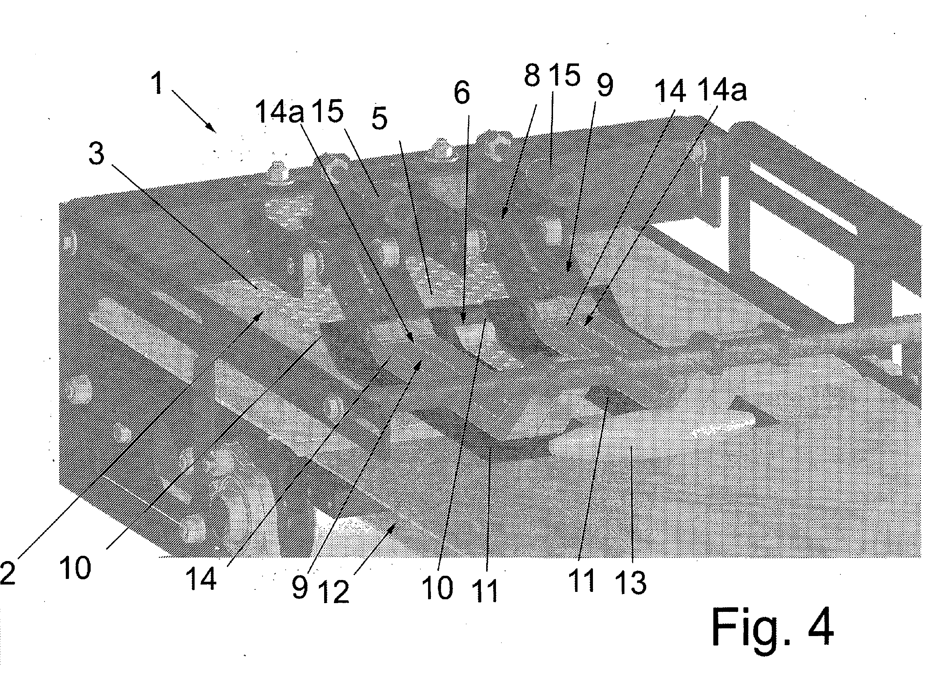

In der weiteren perspektivischen Ansicht der Teigwickelvorrichtung 1 der Figur 1 gemäß Figur 4 sind im Unterschied zu den Figuren 1 und 3 beide schwenkarmartigen Wickelkomponenten 9 zu erkennen. Die beiden Wickelkomponenten 9 befinden sich oberhalb des Auflagebereichs der ersten Förderbandeinrichtung 2 und sind senkrecht bzw. quer zur Förderrichtung in einer Ebene, die parallel zur Förderebene ist, zueinander beabstandet. Das heißt, es wird in einem Bereich auf der ersten Förderbandeinrichtung 2 zwischen den sich in Längsrichtung erstreckenden Wickelkomponenten 9 ein mittlerer Bereich freigelassen. Dadurch wird erreicht, dass eine mögliche Füllung des Ausgangsteigstücks 5, die sich im Wesentlichen, mit einer bestimmten Breite, in der Mitte bzw. im Bereich der Längsachse der Förderbandeinrichtung 2 befindet, nicht verschmiert oder zerdrückt bzw. zu den Seiten aus dem Ausgangsteigstück 5 hinausgedrückt wird. Jede der beiden Wickelkomponenten 9 weist identische Einzelbestandteile wie die Vormatte 10, die Wickelmatte 11 usw. auf.

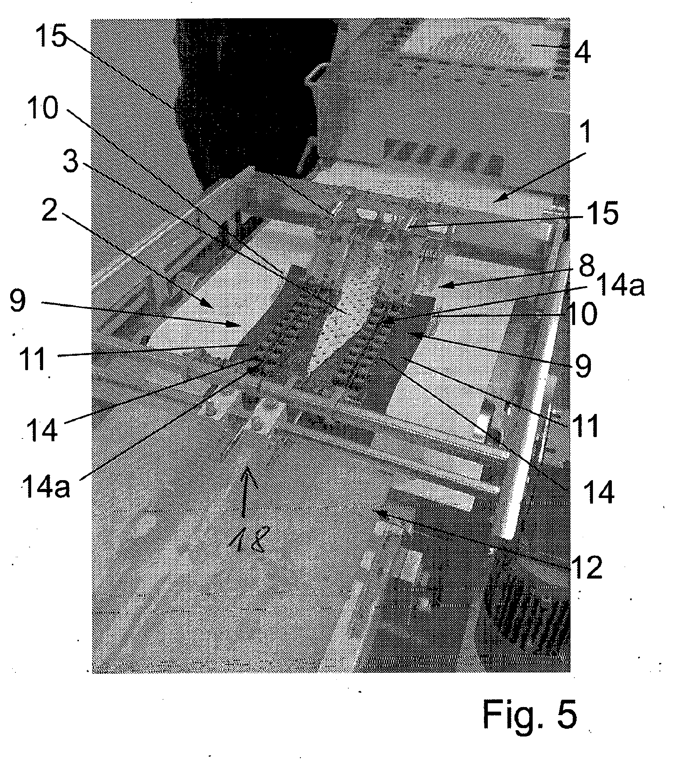

Eine perspektivische Ansicht einer weiteren Wickelvorrichtung 1 ist in der Figur 5 gezeigt. In diesem Fall befindet sich zwischen den beiden Wickelmatten 11 der Wickelkomponenten 9 zum Übergang zum zweiten Fördertisch bzw. zur zweiten Förderbandeinrichtung 12 hin ein geringerer Abstand. In diesem Bereich liegt ja bereits ein vollständig oder zumindest wesentlich aufgewickeltes Teigprodukt vor, so dass dementsprechend nicht mehr die Gefahr besteht, dass eine Füllung verschmiert würde.

Im Unterschied zu der Teigwickelvorrichtung der bisherigen Figuren sind hier im Bereich des Übergangs zur zweiten Förderbandeinrichtung 12 Lagebeeinflussungsmittel 18 in Form von L-förmigen Bügeln gezeigt, die dazu dienen, das fertig gewickelte Teigprodukt in einer definierten, kontrollierten Lage zu halten, beispielsweise so, dass die Spitze eines aufgewickelten Dreiecks direkt auf einer Förderbandeinrichtung zum Liegen kommt. Die Lagebeeinflussungsmittel 18 können dazu, je nach Länge des zu verarbeitenden Teigstücks, in der Förderrichtung verschoben werden. Selbstverständlich sind bei unterschiedlichen Breiten weitere Einstellungsmöglichkeiten beispielsweise quer zur Förderrichtung und auch eine Höhenverstellung denkbar.

### Bezugszeichenliste

- 1: Teigwickelvorrichtung
- 2: erste Förderbandeinrichtung
- 3: Lochband
- 4: Platte
- 5: Ausgangsteigstück, gewickeltes Teigstück
- 6: vordere Kante
- 7: Unterdrucksaugvorrichtung
- 8: Wickeleinrichtung
- 9: Wickel komponente
- 10: Vormatte
- 11: Wickelmatte
- 12: zweite Förderbandeinrichtung
- 13: Wickelprodukt
- 14: Gewichtskette
- 14a: Mittelebene
- 15: Schwenkgewicht
- 16: Ansaugkanäle
- 17: Ansaugöffnungen
- 18: Lagebeeinflussungsmittel

## Patentansprüche

1. Teigwickelvorrichtung (1), ausgebildet zur maschinellen Herstellung eines gewickelten Teigprodukts (13) aus einem Ausgangsteigstück (5), mit einer Förderbandeinrichtung (2) mit einem Auflagebereich, auf den das Ausgangsteigstück zum Wickeln zunächst mit einer Ausgangsaufiagefläche auflegbar ist, wobei die Förderbandeinrichtung (2) unterhalb einer Wickeleinrichtung (8) der Teigwickelvorrichtung (1) angeordnet ist, und unterhalb des Auflagebereichs der Förderbandeinrichtung (2) eine Unterdrucksaugvorrichtung (7) vorgesehen ist, die dazu ausgebildet ist, das Ausgangsteigstück (5) während des Wickelns mittels der Wickeleinrichtung (8) auf dem Auflagebereich der Förderbandeinrichtung (2) zu halten, wobei die Unterdrucksaugvorrichtung (7) mit einer Platte (4) mit durch die Platte (4) verlaufenden Ansaugkanälen (16) ausgebildet ist, die in Richtung der dem Auflagebereich der Förderbandeinrichtung (2) zugewandten Oberfläche der Platte (4) Ansaugöffnungen (17) aufweisen, wobei die Ansaugöffnungen (17) insgesamt so angeordnet sind, dass Ihr Gesamterscheinungsbild auf dle Form und
Größe des Ausgangsteigstücks (5) hin angepasst ist, wobei die Platte (4) durch die Anordnung der Ansaugöffnungen (17) auf der dem Auflagebereich der Förderbandeinrichtung (2) zugewandten Oberfläche eine Schablone des Ausgangsteigstücks (5) definiert, und die Platte (4) und/oder ein dem Auflagebereich der Förderbandeinrichtung (2) zugewandter oberer Bereich der Platte (4), der eine Schablone des Ausgangsteigstücks definiert, auswechselbar sind.

2. Teigwickelvorrichtung (1) nach Anspruch 1, **dadurch gekennzeichnet, dass** der Auflagebereich der Förderbandeinrichtung (2) luftdurchlässig und/oder mit Öffnungen und/oder Löchern ausgebildet ist, insbesondere als Lochband (3) und/oder mit einer Banddicke im Bereich eines Millimeters.

3. Teigwickelvorrichtung (1) nach einem der vorangehenden Ansprüche, **dadurch gekennzeichnet dass** die Platte (4) durch die Anordnung der Ansaugöffnungen (17) auf der dem Auflagebereich der Förderbandeinrichtung (2) zugewandten Oberfläche eine Schablone eines Ausgangsteigstücks (5) in einer Dreiecksform definiert.

4. Teigwickelvorrichtung (1) nach einem der vorangehenden Ansprüche, **dadurch gekennzeichnet, dass** die Unterdrucksaugvorrichtung (7) wenigstens ein mit wenigstens einer nicht dem Auflagebereich der Förderbandeinrichtung (2) zugewandten Öffnung eines durch die Platte verlaufenden Ansaugkanals (16) verbundenes oder verbindbares Ansaugelement aufweist.

5. Telgwickelvorrichtung (1) nach einem der vorangehenden Ansprüche, **dadurch gekennzeichnet, dass** die Wickeleinrichtung (8) wenigstens zwei sich in der Förderrichtung der Förderbandeinrichtung (2) erstreckende Wickelkomponenten (9), insbesondere jeweils mit einem Schwenkarm, aufweist, die in einer Ebene parallel zur Förderebene senkrecht oder quer zur Förderrichtung voneinander beabstandet sind, insbesondere einstellbar beabstandet.

6. Teigwickelvorrichtung (1) nach einem der vorangehenden Ansprüche, **dadurch gekennzeichnet, dass** die Wickeleinrichtung (8), insbesondere eine Wickelkomponente (9) der Wickeleinrichtung (8), wenigstens eine Vormatte (10) zum Anheben einer in der Förderrichtung der Förderbandeinrichtung (2) vorderen Kante (6) des Ausgangsteigstücks (5) und/oder zum Anrollen des Ausgangsteigstücks (5) und/oder eine Wickelmatte (11) zum Wickeln oder Fertigwickeln des Ausgangsteigstücks (5) oder eines bereits teilweise gewickelten Teigstücks (5) aufweist,

7. Teigwickelvorrichtung (1) nach Anspruch 6, **dadurch gekennzeichnet, dass** wenigstens eine Vormatte (10) eine Drahtmatte ist und/oder dass wenigstens eine Wickelmatte (11) eine Kunststoffmatte und/oder Gummimatte und/oder elastische und/oder sich bei Kontakt flexibel an das Ausgangsteigstück (5) oder bereits teilweise gewickelte Teigstück (5) anpassende Matte ist.

8. Teigwickelvorrichtung (1) nach einem der vorangehenden Ansprüche, **dadurch gekennzeichnet, dass** die Wickeleinrichtung (8), insbesondere eine Wickelkomponente (9) der Wickeleinrichtung (8), wenigstens ein Gewichtsteil (14, 15) aufweist, insbesondere wenigstens eine Gewichtskette (14) und/oder wenigstens ein Gewichtsstück (15) und/oder wenigstens ein bezüglich wenigstens einer Achse, die insbesondere In einer zur Förderebene parallelen Ebene senkrecht oder quer zur Förderrichtung der Förderbandeinrichtung verläuft, bewegbar angeordnetes und/oder hinsichtlich seiner Gewichtskraft variables und/oder austauschbares Gewichtsteil (14, 15).

9. Teigwickelvorrichtung (1) nach einem der vorangehenden Ansprüche, **dadurch gekennzeichnet, dass** die Teigwickeivortlchtung (1) zur Reinigung der Förderbandeinrichtung (2), Insbesondere des Auflageberelchs der Förderbandeinrichtung (2), wenigstens eine Abstreifer- und/oder Bürstenanordnung aufweist.

10. Teigwickelvorrichtung (1) nach einem der vorangehenden Ansprüche, **dadurch gekennzeichnet, dass** in der Förderrichtung der Förderbandeinrichtung (2) im Anschluss an diese erste Förderbandeinrichtung (2) eine zweite Förderbandeinrichtung (12) vorgesehen ist, insbesondere derart, dass diese zweite Förderbandeinrichtung (12) mit einer bezüglich der ersten Förderbandeinrichtung (2) geringeren Geschwindigkeit betreibbar ist und/oder sich eine Wickelmatte (11) der Wickeleinrichtung (8) bis in den Bereich der zweiten Förderbandeinrichtung (2) erstreckt.

11. Teigwickelvorrichtung (1) nach einem der vorangehenden Ansprüche, **dadurch gekennzeichnet, dass** oberhalb wenigstens einer oder der Förderbandeinrichtung (2, 12) in einer geeigneten und/oder veränderbaren Höhe wenigstens zwei, in einer Ebene parallel zur Förderebene senkrecht oder quer zu Förderrichtung der Förderbandeinrichtung (2, 12) beabstandete und in Förderrichtung oder wenigstens einer Richtung verschiebbare und/oder austauschbare Lagebeeinflussungsmittel (18), insbesondere in Bügelform, angeordnet sind, mittels derer die Lage des, insbesondere bereits aufgewickelten, Teigstücks (5) beeinflussbar ist.

12. Verfahren zur maschinellen Herstellung eines gewickelten Telgprodukts (13) aus einem Ausgangstelgstück (5) mittels einer Teigwickelvorrichtung (1), insbesondere mittels einer Teigwickelvorrichtung (1) nach einem der vorangehenden Ansprüche, mit einer Förderbandeinrichtung (2) mit einem Auflagebereich, auf den das Ausgangsteigstück (5) zum Wickeln zunächst mit einer Ausgangsauflagefläche aufgelegt wird, wobei die Förderbandeinrichtung (2) unterhalb einer Wickeleinrichtung (8) der Teigwickelvorrichtung (1) verläuft, und das Ausgangsteigstück (5) mittels einer Unterdrucksaugvorrichtung (7) unterhalb des Auflagebereichs der Förderbandeinrichtung (2) während des Wickelns durch die Wickeleinrichtung (8) auf dem Auflagebereich der Förderbandeinrichtung (2) gehalten wird, wozu durch eine Platte (4) der Unterdrucksaugvorrichtung (7) Ansaugkanäle (16) verlaufen, deren Ansaugöffnungen (17) in Richtung der dem Auflagebereich der Förderbandeinrichtung (2) zugewandten Oberfläche der Platte (4) angeordnet sind, wobei die Ansaugöffnungen (17) Insgesamt so angeordnet werden, dass ihr Gesamterscheinungsbild auf die Form und Größe des Ausgangsteigstücks hin angepasst wird, so dass das Ausgangsteigstück (5) durch Erzeugen eines Unterdrucks zum Wickeln, zumindest im Wesentlichen, über seine gesamte Ausgangsauflagefläche auf dem Auflagebereich der Förderbandeinrichtung (2) gehalten wird, wobei ein Ansaugen an Stellen, die überhaupt nicht in Kontakt mit dem Ausgangsteigstück (5) kommen könnten, vermieden wird, und wobei die Platte (4) und/oder ein dem lagebereich der Förderbandeinrichtung (2) zugewandter oberer Bereich der Platte (4), der eine Schablone des Ausgangsteigstücks (5) definiert, zur
Anpassung an Ausgangsteigstücke (5) unterschiedlicher Formen und/oder Größen ausgewechselt wird.

13. Verfahren nach Anspruch 12, **dadurch gekennzeichnet, dass** die Unterdrucksaugvorrichtung (7) das Ausgangsteigstück (5) durch einen luftdurchlässigen und/oder mit Öffnungen und/oder Löchern versehenen Auflagebereich der Förderbandeinrichtung (2), insbesondere durch ein Lochband (3) und/oder durch ein Band mit einer Banddicke im Bereich eines Millimeters, ansaugt und/oder dass die Unterdrucksaugvorrichtung (7) das Ausgangsteigstück (5) mittels wenigstens eines mit wenigstens einer nicht dem Auflagebereich der Förderbandeinrichtung (2) zugewandten Öffnung eines durch die Platte verlaufenden Ansaugkanals (16) verbundenen oder verbindbaren Ansaugelements ansaugt,

14. Verfahren nach einem der Ansprüche 12 oder 13, **dadurch gekennzeichnet, dass** durch die Anordnung der Ansaugöffnungen (17) auf der dem Auflagebereich der Förderbandeinrichtung (2) zugewandten Oberfläche der Platte (4) die Schablone des Ausgangstelgstücks (5), insbesondere eines Ausgangsteigstücks (5) in einer Dreiecksform, definiert wird.

## Claims

1. A dough twisting apparatus (1) designed for the mechanical production of a twisted dough product (13) from an initial piece of dough (5), comprising a conveyer belt device (2) with a contact area on which the initial piece of dough is placed for twisting first of all with an initial contact surface, the conveyer belt device (2) being arranged below a twisting device (8) of the dough twisting apparatus (1), and a low-pressure suction apparatus (7) being provided below the contact area of the conveyor belt device (2), said low-pressure suction apparatus being designed to hold the initial piece of dough (5) on the contact area of the conveyor belt device (2) during twisting by means of the twisting device (8), the low-pressure suction apparatus (7) being formed with a plate (4) having suction channels (16) running through the plate (4) and which have suction openings (17) in the direction of the surface of the plate (4) facing towards the contact area of the conveyor belt device (2), the suction openings (17) being arranged collectively such that their overall appearance is matched to the shape and size of the initial piece of dough (5), the plate (4) defining a template of the initial piece of dough (5) by the arrangement of the suction openings (17) over the surface facing towards the contact area of the conveyor belt device (2), and the plate (4) and/or an upper area of the plate (4) facing towards the contact area of the conveyor belt device (2) and which defines a template of the initial piece of dough, being interchangeable.

2. The dough twisting apparatus (1) according to Claim 1, **characterised in that** the contact area of the conveyor belt device (2) is formed in an air-permeable manner and/or with openings and/or holes, in particular as a perforated belt (3) and/or with a belt thickness in the range of one millimetre.

3. The dough twisting apparatus (1) according to any of the preceding claims, **characterised in that** the plate (4) defines a triangular template of an initial piece of dough (5) on the surface facing towards the contact area of the conveyor belt device (2) by the arrangement of the suction openings (17).

4. The dough twisting apparatus (1) according to any of the preceding claims, **characterised in that** the low-pressure suction apparatus (7) has at least one suction element connected or connectable to at least one opening of a suction channel (16) running through the plate and not turned towards the contact area of the conveyor belt device (2).

5. The dough twisting apparatus (1) according to any of the preceding claims, **characterised in that** the twisting device (8) has at least two twisting components (9) extending in the direction of conveyance of the conveyor belt device (2), in particular each twisting component having a pivot arm, said twisting components being spaced apart, particularly adjustably spaced apart, from each other perpendicularly or transversely to the direction of conveyance in a plane parallel to the plane of conveyance.

6. The dough twisting apparatus (1) according to any of the preceding claims, **characterised in that** the twisting device (8), in particular a twisting component (9) of the twisting device (8), has at least one pre-mat (10) for lifting a front edge (6) of the initial piece of dough (5) in the direction of conveyance of the conveyor belt device (2) and/or for rolling the initial piece of dough (5) and/or a twisting mat (11) for winding or wrapping the initial piece of dough (5) or an already partially twisted piece of dough (5).

7. The dough twisting apparatus (1) according to Claim 6, **characterised in that** at least one pre-mat (10) is a wire mat and/or that at least one twisting mat (11) is a plastic mat and/or a rubber mat and/or an elastic mat and/or a mat flexibly adapted to the initial piece of dough (5) upon contact or to the already partially twisted piece of dough (5).

8. The dough twisting apparatus (1) according to any of the preceding claims, **characterised in that** the twisting device (8), in particular a twisting component (9) of the twisting device (8), has at least one weight part (14, 15), in particular at least one weight chain (14) and/or at least one weight piece (15) and/or at least one weight part (14, 15) arranged moveably in relation to at least one axis which runs in particular in a plane parallel to the plane of conveyance perpendicularly or transversely to the direction of conveyance of the conveyor belt device and/or variable and/or exchangeable as regards its weight.

9. The dough twisting apparatus (1) according to any of the preceding claims, **characterised in that** the dough twisting apparatus (1) has at least one stripping and/or brushing arrangement for cleaning the conveyor belt device (2), in particular the contact area of the conveyor belt device (2).

10. The dough twisting apparatus (1) according to any of the preceding claims, **characterised in that** a second conveyor belt device (12) is provided connected to the first conveyor belt device (2) in the direction of conveyance of this conveyor belt device (2), in particular such that this second conveyor belt device (12) can be operated at a lower speed with respect to the first conveyor belt device (2) and/or a twisting mat (11) of the twisting device (8) extends into the area of the second conveyor belt device (2).

11. The dough twisting apparatus (1) according to any of the preceding claims, **characterised in that** at least two position influencing means (18), in particular in the form of clamps, are arranged above at least one or the conveyor belt device (2, 12) at a suitable and/or changeable height, spaced apart perpendicularly or transversely to the direction of conveyance of the conveyor belt device (2, 12) in a plane parallel to the plane of conveyance and displaceable and/or exchangeable in the direction of conveyance or at least one direction, by means of which the position of the piece of dough (5), in particular of the already twisted piece of dough (5), can be influenced.

12. A method for mechanically producing a twisted dough product (13) from an initial piece of dough (5) by means of a dough twisting apparatus (1), in particular by means of a dough twisting apparatus (1) according to any of the preceding claims, comprising a conveyer belt device (2) with a contact area on which the initial piece of dough (5) is placed for twisting first of all with an initial contact surface, the conveyer belt device (2) running below a twisting device (8) of the dough twisting apparatus (1), and the initial piece of dough (5) being held on the contact area of the conveyor belt device (2) by means of a low-pressure suction apparatus (7) below the contact area of the conveyor belt device (2) during twisting by means of the twisting device (8), for which purpose suction channels (16) run through a plate (4) of the low-pressure suction apparatus (7), the suction openings (17) of which are arranged in the direction of the surface of the plate (4) facing towards the contact area of the conveyor belt device (2), the suction openings (17) being arranged collectively such that their overall appearance is matched to the shape and size of the initial piece of dough so that the initial piece of dough (5) is held on the contact area of the conveyor belt device (2) by generating a low pressure for twisting, at least substantially, over its whole initial contact surface, suction being avoided at points which could absolutely not come into contact with the initial piece of dough (5), and the plate (4) and/or an upper area of the plate (4) facing towards the contact area of the conveyor belt device (2) and which defines a template of the initial piece of dough, being exchanged in order to adapt to initial pieces of dough (5) of different shapes and/or sizes.

13. The method according to Claim 12, **characterised in that** the low-pressure suction apparatus (7) sucks the initial piece of dough (5) through a contact area of the conveyor belt device (2) that is air-permeable and/or is provided with openings and/or holes, in particular through a perforated belt (3) and/or through a belt with a belt thickness in the range of one millimetre, and/or that the low-pressure suction apparatus (7) sucks the initial piece of dough (5) by means of at least one suction element connected or connectable to at least one opening not facing towards the contact area of the conveyor belt device (2) of a suction channel (16) running through the plate.

14. The method according to either of Claims 12 or 13, **characterised in that** the template of the initial piece of dough (5), in particular of a triangular initial piece of dough (5), is defined by the arrangement of the suction openings (17) over the surface of the plate (4) facing towards the contact area of the conveyor belt device (2).

## Revendications

1. Dispositif d'enroulement de pâte (1), conçu pour la fabrication mécanique d'un produit en pâte enroulé (13) à partir d'une pièce de pâte brute (5), comprenant un dispositif à bande transporteuse (2) présentant une zone de réception sur laquelle la pièce de pâte brute peut être posée tout d'abord avec une surface d'appui initiale pour être enroulée, le dispositif à bande transporteuse (2) étant disposé au-dessous d'un dispositif d'enroulement (8) du dispositif d'enroulement de pâte (1), et un dispositif d'aspiration à dépression (7) étant prévu au-dessous de la zone de réception du dispositif à bande transporteuse (2) et conçu pour maintenir la pièce de pâte brute (5) sur la zone de réception du dispositif à bande transporteuse (2) pendant l'enroulement par le dispositif d'enroulement (8), le dispositif d'aspiration à dépression (7) comportant une plaque (4) pourvue de canaux d'aspiration (16) s'étendant à travers la plaque (4), qui présentent des orifices d'aspiration (17) dans la direction de la surface de la plaque (4) orientée vers la zone de réception du dispositif à bande transporteuse (2), les orifices d'aspiration (17) étant, dans leur ensemble, disposés de sorte que leur aspect global corresponde à la forme et à la dimension de la pièce de pâte brute (5), la plaque (4) définissant, par l'agencement des orifices d'aspiration (17) sur la surface orientée vers la zone de réception du dispositif à bande transporteuse (2), un gabarit de la pièce de pâte brute (5), et la plaque (4) et/ou une région supérieure de la plaque (4) orientée vers la zone de réception du dispositif à bande transporteuse (2) et définissant un gabarit de la pièce de pâte brute (5), pouvant être changée(s).

2. Dispositif d'enroulement de pâte (1) selon la revendication 1, **caractérisé en ce que** la zone de réception du dispositif à bande transporteuse (2) est conçue pour être perméable à l'air et/ou est pourvue d'ouvertures et/ou de trous, en particulier se présente sous forme d'une bande perforée (3) et/ou ayant une épaisseur de bande de l'ordre d'un millimètre.

3. Dispositif d'enroulement de pâte (1) selon l'une des revendications précédentes, **caractérisé en ce que** la plaque (4) définit, par l'agencement des orifices d'aspiration (17) sur la surface orientée vers la zone de réception du dispositif à bande transporteuse (2), un gabarit d'une pièce de pâte brute (5) ayant une forme triangulaire.

4. Dispositif d'enroulement de pâte (1) selon l'une des revendications précédentes, **caractérisé en ce que** le dispositif d'aspiration à dépression (7) présente au moins un élément d'aspiration raccordé ou pouvant être raccordé à au moins un orifice, non orienté vers la zone de réception du dispositif à bande transporteuse (2), d'un canal d'aspiration (16) s'étendant à travers la plaque.

5. Dispositif d'enroulement de pâte (1) selon l'une des revendications précédentes, **caractérisé en ce que** le dispositif d'enroulement (8) présente au moins deux organes d'enroulement (9) s'étendant dans la direction de transport du dispositif à bande transporteuse (2), en particulier pourvus chacun d'un bras pivotant, qui sont espacés l'un de l'autre, en particulier espacés de manière réglable, dans un plan parallèle au plan de transport perpendiculairement ou transversalement à la direction de transport.

6. Dispositif d'enroulement de pâte (1) selon l'une des revendications précédentes, **caractérisé en ce que** le dispositif d'enroulement (8), en particulier un organe d'enroulement (9) du dispositif d'enroulement (8), présente au moins une avant-natte (10) destinée à relever un bord avant (6), dans la direction de transport du dispositif à bande transporteuse (2), de la pièce de pâte brute (5) et/ou à commencer à enrouler la pièce de pâte brute (5) et/ou une natte d'enroulement (11) pour enrouler ou finir d'enrouler la pièce de pâte brute (5) ou une pièce de pâte (5) déjà partiellement enroulée.

7. Dispositif d'enroulement de pâte (1) selon la revendication 6, **caractérisé en ce qu'**au moins une avant-natte (10) est une natte en fil métallique et/ou **en ce qu'**au moins une natte d'enroulement (11) est une natte en matière plastique et/ou une natte en caoutchouc et/ou une natte élastique et/ou s'ajustant de manière flexible au contact de la pièce de pâte brute (5) ou de la pièce de pâte (5) déjà partiellement enroulée.

8. Dispositif d'enroulement de pâte (1) selon l'une des revendications précédentes, **caractérisé en ce que** le dispositif d'enroulement (8), en particulier un organe d'enroulement (9) du dispositif d'enroulement (8), présente au moins un élément formant poids (14, 15), en particulier au moins une chaîne à poids (14) et/ou au moins un poids (15) et/ou au moins un élément formant poids (14, 15) disposé de façon mobile par rapport à au moins un axe s'étendant en particulier dans un plan parallèle au plan de transport perpendiculairement ou transversalement à la direction de transport du dispositif de bande transporteuse, et/ou ayant un poids variable et/ou pouvant être changé.

9. Dispositif d'enroulement de pâte (1) selon l'une des revendications précédentes, **caractérisé en ce que** le dispositif d'enroulement de pâte (1) comporte au moins un ensemble à racle et/ou à brosse pour nettoyer le dispositif à bande transporteuse (2), en particulier la zone de réception du dispositif à bande transporteuse (2).

10. Dispositif d'enroulement de pâte (1) selon l'une des revendications précédentes, **caractérisé en ce qu'**est prévu, dans la direction de transport du dispositif à bande transporteuse (2) et à la suite de ce premier dispositif à bande transporteuse (2), un second dispositif à bande transporteuse (12), en particulier de telle sorte que ce second dispositif à bande transporteuse (12) soit apte à fonctionner à une vitesse inférieure au premier dispositif à bande transporteuse (2) et/ou qu'une natte d'enroulement (11) du dispositif d'enroulement (8) s'étende jusque dans la zone du second dispositif à bande transporteuse (12).

11. Dispositif d'enroulement de pâte (1) selon l'une des revendications précédentes, **caractérisé en ce que** sont disposés au-dessus d'au moins un des ou du dispositif(s) à bande transporteuse (2, 12), à une hauteur appropriée et/ou variable, au moins deux moyens (18) capables de modifier la position, en particulier sous forme d'étriers, qui sont espacés dans un plan parallèle au plan de transport perpendiculairement ou transversalement à la direction de transport du dispositif à bande transporteuse (2, 12) et déplaçables dans la direction de transport ou au moins dans une direction et/ou peuvent être changés, et qui permettent de modifier la position de la pièce de pâte (5), en particulier déjà enroulée.

12. Procédé pour la fabrication mécanique d'un produit en pâte enroulé (13) à partir d'une pièce de pâte brute (5) au moyen d'un dispositif d'enroulement de pâte (1), en particulier au moyen d'un dispositif d'enroulement de pâte (1) selon l'une des revendications précédentes, comprenant un dispositif à bande transporteuse (2) présentant une zone de réception sur laquelle la pièce de pâte brute peut être posée tout d'abord avec une surface d'appui initiale pour être enroulée, le dispositif à bande transporteuse (2) s'étendant au-dessous du dispositif d'enroulement (8) du dispositif d'enroulement de pâte (1) et la pièce de pâte brute (5) étant maintenue sur la zone de réception du dispositif à bande transporteuse (2) au moyen d'un dispositif d'aspiration à dépression (7) au-dessous de la zone de réception du dispositif d'aspiration à dépression (7) pendant l'enroulement par le dispositif d'enroulement (8), des canaux d'aspiration (16) s'étendant à travers une plaque (4) du dispositif d'aspiration à dépression (7), dont les orifices d'aspiration (17) sont disposés dans la direction de la surface de la plaque (4) orientée vers la zone de réception du dispositif à bande transporteuse (2), les orifices d'aspiration (17) étant, dans leur ensemble, disposés de sorte que leur aspect global corresponde à la forme et à la dimension de la pièce de pâte brute (5), de sorte que la pièce de pâte brute (5) soit maintenue sur la zone de réception du dispositif à bande transporteuse (2) en générant une dépression pour enroulement au moins sensiblement sur toute sa surface d'appui initiale, évitant ainsi une aspiration à des endroits non susceptibles de venir au contact de la pièce de pâte brute (5), et la plaque (4) et/ou une région supérieure de la plaque (4) orientée vers la zone de réception du dispositif à bande transporteuse (2) et définissant un gabarit de la pièce de pâte brute (5), étant remplacée pour s'adapter à des pièces de pâte brute (5) de formes et/ou de dimensions différentes.

13. Procédé selon la revendication 12, **caractérisé en ce que** le dispositif d'aspiration à dépression (7) aspire la pièce de pâte brute (5) à travers une zone de réception du dispositif à bande transporteuse (2) perméable à l'air et/ou pourvue d'orifices et/ou de trous, en particulier à travers une bande perforée (3) et/ou à travers une bande ayant une épaisseur de l'ordre d'un millimètre, et/ou **en ce que** le dispositif d'aspiration à dépression (7) aspire la pièce de pâte brute (5) au moyen d'au moins un élément d'aspiration raccordé ou pouvant être raccordé à au moins un orifice, non orienté vers la zone de réception du dispositif à bande transporteuse (2), d'un canal d'aspiration (16) s'étendant à travers la plaque.

14. Procédé selon la revendication 12 ou 13, **caractérisé en ce que** le gabarit de la pièce de pâte brute (5), en particulier d'une pièce de pâte brute (5) de forme triangulaire, est défini par l'agencement des orifices d'aspiration (17) sur la surface de la plaque (4) orientée vers la zone de réception du dispositif à bande transporteuse (2).
